# EUROPEAN PATENT SPECIFICATION

(11) **EP 1 247 637 B1**
(45) Date of publication and mention of the grant of the patent: **05.10.2005**
(21) Application number: 01108745.9
(22) Date of filing: 06.04.2001
(51) Int. Cl.: B29C 65/18, B65B 51/30

(54) **Packaging machine for producing sealed packages for pourable food products**
Verpackungsmaschine zur Herstellung von versiegelten Verpackungen für fliessfähige Nahrungsmittel
Machine d'emballage pour la production d'emballages scellés pour des aliments liquides

(43) Date of publication of application: 09.10.2002
(73) Proprietor: Tetra Laval Holdings & Finance SA, 1009 Pully (CH)
(72) Inventor: Selberg, Hans, 22653 Lund (SE)
(74) Representative: Franzolin, Luigi

(56) References cited:
- EP-A- 0 460 540
- GB-A- 991 090
- US-A- 3 135 077
- US-A- 3 262 833
- US-A- 3 496 049
- US-A- 5 417 041

## Description

The present invention relates to a packaging machine for continuously producing sealed packages of a pourable food product and featuring a sealing device for pulsation heat sealing thermoplastic packaging material.

Many pourable food products, such as fruit juice, UHT milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing laminated strip packaging material having a multilayer structure comprising a layer of fibrous material, e.g. paper, covered on both sides with heat-seal plastic material, e.g. polyethylene.

In the case of aseptic packages for long-storage products such as UHT milk, the packaging material comprises a layer of barrier material, e.g. an aluminium or EVOH sheet, which is superimposed on a layer of heat-seal plastic material and is in turn covered with another layer of heat-seal plastic material eventually forming the inner face of the package contacting the food product.

As is known e.g. from EP-A-0 460 540, such packages are made on fully automatic packaging machines, on which a continuous tube is formed from the web-fed packaging material; the web of packaging material is sterilized on the packaging machine itself, e.g. by applying a chemical sterilizing agent, such as a hydrogen peroxide solution, which, after sterilization, is removed, e.g. vaporized by heating, from the surfaces of the packaging material; and the web of packaging material so sterilized is maintained in a closed sterile environment, and is folded and sealed longitudinally to form a vertical tube.

The tube is filled with the sterilized or sterile-processed food product, and is gripped at equally spaced cross sections by two pairs of jaws. More specifically, the pairs of jaws act cyclically and successively on the tube to heat seal the packaging material of the tube and form a continuous strip of pillow packs connected to one another by respective transverse sealing bands.

The pillow packs are separated by cutting the relative sealing bands, and are then conveyed to a final folding station where they are folded mechanically into the finished parallelepiped shape.

The tube portion gripped between each pair of jaws is heat sealed by heating means carried by one of the jaws and for locally melting the two layers of thermoplastic material gripped between the jaws.

More specifically, packaging material in which the barrier layer is defined by a sheet of electrically conducting material, e.g. aluminium, is normally sealed by a so-called induction heat seal process, in which, when the tube is gripped by the pair of jaws, leakage current is induced in the aluminium sheet to heat the aluminium sheet locally and so locally melt the heat-seal plastic material.

More specifically, in induction heat sealing, the heating means substantially comprise an inductor carried by one of the two jaws - known as the sealing jaw - and which is powered by a high-frequency current generator and substantially defined by a bar of electrically conducting material which interacts with and induces in the tube material a leakage current to bring the tube material up to the required sealing temperature; while the other jaw -known as the counterjaw - has pressure pads made of elastic material and which cooperate with the inductor to heat seal the tube along a relative sealing band.

Once the sealing operation is completed, a knife carried by one of the two jaws and interacting with the tube of packaging material is activated to cut the tube along the center line of the sealing band and so cut a pillow pack off the bottom end of the tube of packaging material. Since the bottom end is sealed transversely, the jaws, on reaching the bottom dead center position, can be opened to avoid interfering with the top portion of the tube. At the same time, the other pair of jaws, operated in exactly the same way, moves down from a top dead center position to repeat the gripping/forming, sealing and cutting operations described above.

It has recently been proposed to employ packaging material having a barrier layer defined by a sheet of electrically nonconducting material, e.g. EVOH, and to seal the packaging material using a so-called pulsation heat seal process wherein the heat required to locally melt the heat-seal plastic material is supplied by a ceramic heating element carried by the sealing jaw - in this application, also referred to as the heating jaw - and which, when the tube is gripped by the pair of jaws, is heated instantaneously by applying a current pulse, the amplitude and duration of which depend on the desired characteristics of the seal.

A sealing jaw with a ceramic heating element for pulsation heat sealing is described, for example, in US Patent 5,682,732 filed by the present Applicant.

More specifically, the sealing jaw comprises a steel or copper bar; a layer of electrically insulating ceramic material - in particular, a mixture of zirconium oxide (ZᵣO₂) and silicon carbide (SIC) - fixed to the bar by adhesive or other mechanical anchoring means; and a strip of electrically conducting ceramic material - in particular, a mixture of titanium boride (TᵢB₂) and silicon carbide (SIC) - which is housed partly in a cavity formed in the layer of electrically insulating ceramic material, projects from the layer of electrically insulating ceramic material, and has metallized ends for connection to an electric current source for supplying a current pulse whenever the strip of electrically conducting ceramic material is to be heated to perform a heat-seal operation.

Though widely used, the sealing jaw described above has several minor drawbacks preventing its many advantages from being exploited to the full.

In particular, tests conducted by the Applicant have shown that packaging machines featuring such sealing jaws fail to provide for seals of the same high quality as those obtainable by induction heat sealing, which explains why pulsation heat sealing is adopted on so few, and in particular high-speed, packaging machines.

Heat dissipation of the above sealing jaw, in fact, is fairly slow, so that the sealing jaw cannot be cooled fast enough to ensure the same working temperature at the start of each sealing operation. As a result, packaging machines employing this type of sealing jaw fail to reproduce the same working conditions at each sealing operation, and hence to provide for accurately controlling flow of the molten thermoplastic material within the packaging material, which is indispensable for obtaining high-quality seals.

Tests conducted by the Applicant have also shown that, using jaws of the above type, transverse sealing of the tube of packaging material is particularly sensitive to nonparallelism of the jaws in each pair and to the position of the longitudinal seal on the tube of packaging material, and that the jaws perform poorly on multiple-jaw packaging machines.

US-A-3 135 077 relates to an apparatus for forming individual sealed packages from a continuous web of heat-sealable material, and, more particularly, to the formation of such packages by heat-sealing means of impulse-heated type. The apparatus includes a heat-sealing and cutting member including an elongated bar of heat-conducting material having a longitudinally extending groove, a series of ceramic heat insulating and electrically nonconducting members disposed in end-to-end relation in the groove, and each having a longitudinally extending groove and an elongated heat-sealing and cutting element of electrically high resistant material arranged in the groove and having a potion projecting from the ceramic members to expose a heat-sealing and cutting edge.

US-A-3 496 049 relates to an apparatus for heat-sealing thermoplastic films for packaging various products, comprising upper sealing bars in a relatively movable confronting relation to stationary lower sealing bars having outer opposed surfaces for releasably clamping surface portions of superimposed plies of thermoplastic film therebetween, and electrically heated elements adjacent at least one of the outer surfaces for heat-sealing the plies along a predetermined line when the plies are clamped between the opposed surfaces.

It is an object of the present invention to provide a packaging machine for producing sealed packages of a pourable food product from a tube of sheet packaging material that can be pulsation heat sealed, and which provides for obtaining seals of the same quality as those obtainable by induction heat sealing.

According to the present invention, there is provided a packaging machine for producing sealed packages of a pourable food product from a tube of sheet packaging material that can be pulsation heat sealed, as claimed in Claim 1.

A preferred embodiment of the present invention will be described with reference to the accompanying drawings, in which:
Figure 1 shows a view in perspective, with parts removed for clarity, of a packaging machine for producing aseptic sealed packages of pourable food produces from a tube of packaging material;
Figure 2 shows a cross section of a sealing jaw in accordance with the present invention and forming part of the Figure 1 packaging machine.

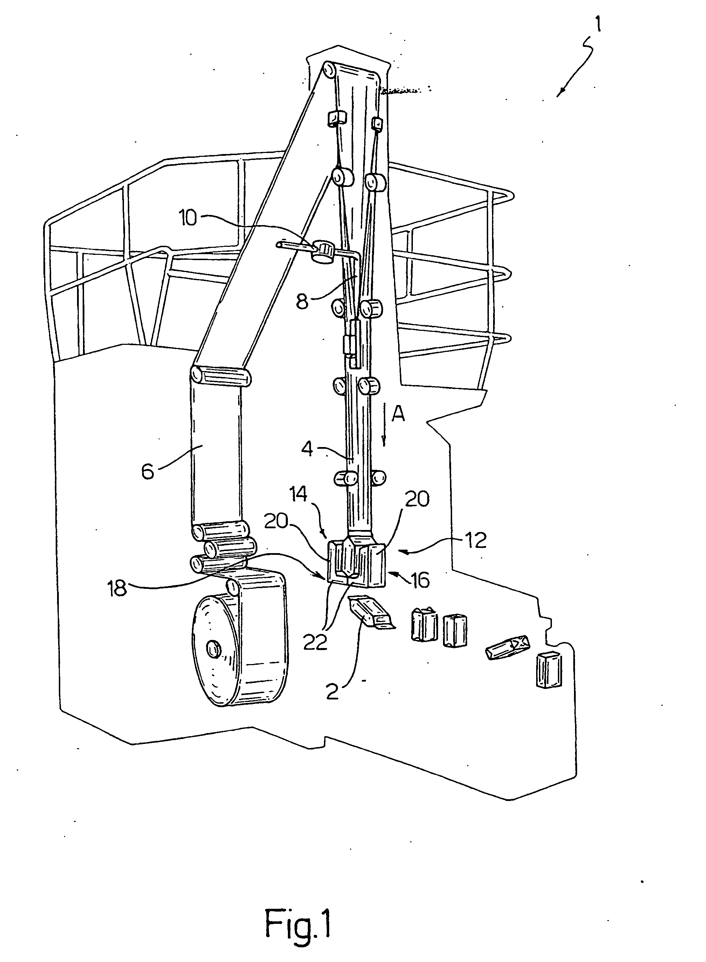

Number 1 in Figure 1 indicates as a whole a packaging machine for continuously producing aseptic sealed packages 2 of a pourable food product, such as pasteurized or UHT milk, fruit juice, wine, etc., from a tube 4 of packaging material.

The packaging material has a multilayer structure (not shown) and comprises a layer of fibrous material, normally paper, covered on both sides with respective layers of heat-seal plastic material, e.g. polyethylene; and the side of the packaging material eventually contacting the food product in package 2 also has a layer of barrier material, in turn covered with one or more layers of heat-seal plastic material.

Tube 4 is formed in known manner - not described in detail - by longitudinally folding and sealing a web of heat-seal sheet packaging material 6, is filled with the sterilized or sterile-processed food product by means of a fill pipe 8 extending inside tube 4 and having a flow-regulating solenoid valve 10, and is fed by known devices along a vertical path A to a forming station 12 where it is cut transversely and folded mechanically into packages 2.

More specifically, forming station 12 comprises a pair of forming assemblies 14 (only one shown in Figure 1) which move vertically along respective guides (not shown) and interact cyclically and successively with tube 4 to grip it at equally spaced cross sections and to perform on tube 4 heat-seal and cutting operations by which to form a continuous strip of pillow packs connected to one another by respective transverse sealing bands, and which are separated by cutting along the respective sealing bands, and are then conveyed to a finish folding station (not shown) where they are folded mechanically into the finished parallelepiped shape to form packages 2.

Each forming assembly 14 substantially comprises a slide (not shown) running along the respective guide; and a pair of jaws 16, 18 hinged to the bottom of the slide about respective horizontal axes and movable between a closed position and a fully open position.

In the example shown, each jaw 16, 18 is defined by a substantially L-shaped plate comprising a substantially quadrangular base portion 20 hinged by its bottom end to a bottom portion of the slide; and an arm 22 which interacts with tube 4, is fixed to the top end of portion 20, and projects from portion 20 in a direction perpendicular to a vertical longitudinal central plane through the axis defining the vertical path of tube 4. More specifically, arms 22 of jaws 16, 18 extend towards and beyond said central plane so as to be positioned on opposite sides of tube 4.

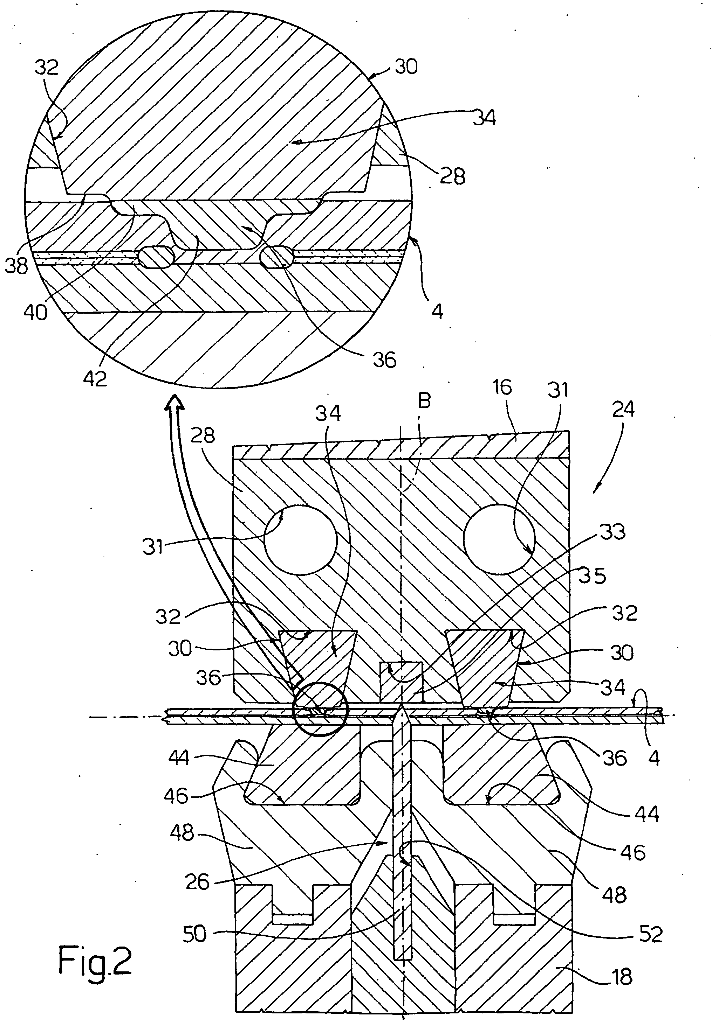

With reference to Figure 2, which shows a cross section of jaws 16, 18 of one forming assembly 14 in the closed position gripping and heat sealing a cross section of tube 4, each forming assembly 14 also comprises a sealing device 24 and a cutting device 26, which, at each cross section of tube 4 gripped between jaws 16, 18, heat seal the cross section and cut along a central parting line respectively.

More specifically, sealing device 24 comprises a cooling body 28, and a pair of ceramic heating elements 30 incorporated in cooling body 28.

Cooling body 28 is made of metal - preferably steel, copper, aluminium or an alloy of such materials - and has a pair of straight elongated cavities 32 in which ceramic heating elements 30 are embedded. More specifically, cavities 32 have roughly U-shaped cross sections narrowing towards the open ends, extend in a direction crosswise to the axis defining the vertical path A of tube 4, and are located symmetrically on opposite sides of an intermediate plane B perpendicular to the axis defining vertical path A of tube 4 and coincident, in use, with the parting line of the cross section of tube 4 gripped between the two jaws 16, 18

Alternatively, cooling body 28 may be separate from jaws 16, 18, may be fixed in known manner to one of them - in the example shown, jaw 16, hereinafter referred to as the sealing jaw - or may be defined by a portion of arm 22 of sealing jaw 16.

Cooling body 28 also has a pair of cooling conduits 31, each extending parallel to and over a respective cavity 32; and a further cavity 33 located between cavities 32 and housing a stop 35 for cutting device 26.

Each ceramic heating element 30 substantially comprises a straight elongated body 34 made of electrically insulating ceramic material, preferably a mixture of zirconium oxide (ZᵣO₂) and silicon carbide (SIC), and having an integral straight longitudinal ridge 36 of electrically conducting ceramic material, preferably a mixture of titanium boride (TᵢB₂) and silicon carbide (SIC).

More specifically, body 34 of electrically insulating ceramic material of each ceramic heating element 30 has a cross section of substantially the same shape and size as respective cavity 32, and is clamped inside cavity 32 by deforming cooling body 28.

More specifically, body 34 of electrically insulating ceramic material of each ceramic heating element 30 is housed inside respective cavity 32 with its base and lateral walls closely contacting the bottom and lateral walls of cavity 32, and has a head portion 38 projecting slightly from cavity 32 and on which ridge 36 extends integrally.

More specifically, ridges 36 of ceramic heating elements 30 extend symmetrically on opposite sides of and parallel to said intermediate plane B along substantially the whole length of head portions 38 of respective bodies 34 of electrically insulating ceramic material, and project towards the other jaw 18 - hereinafter referred to as the counterjaw - to interact with tube 4 and increase the gripping pressure on tube 4 during heat sealing.

In the example shown in Figure 2, each of ridges 36 of ceramic heating elements 30 preferably comprises a wide base portion 40 connected to head portion 38 of respective body 34 of electrically insulating ceramic material, and having a substantially flat rectangular cross section; and a narrow head portion 42, which is connected to and located centrally with respect to base portion 40, has a substantially rectangular cross section with rounded corners, and is roughly twice the height and half the width of base portion 40.

Each of ridges 36 of ceramic heating elements 30 is connected in known manner - not described in detail - to a current generator (not shown) for supplying a current pulse whenever ridge 36 is to be heated to perform a heat-seal operation.

Sealing device 24 also comprises a pair of pressure pads 44, which are made of heat-resistant elastomeric material, preferably nitrile rubber, and are housed in respective similarly shaped front cavities 46 formed in a supporting body 48 carried by counterjaw 18 and preferably made of steel. More specifically, cavities 46 are located symmetrically on opposite sides of central plane B, and are aligned with cavities 32 to enable pressure pads 44 to cooperate with ridges 36 of ceramic heating elements 30 to grip and heat seal tube 4 on opposite sides of central plane B.

Cutting device 26 substantially comprises a substantially flat, knife-shaped cutting member 50, which is housed to slide inside a front cavity 52 in counterjaw 18, is movable in a direction lying in central plane B and perpendicular to the longitudinal vertical central plane through the axis defining vertical path A of tube 4, and is activated by a hydraulic cylinder (not shown) incorporated in the counterjaw.

More specifically, cutting member 50 is normally maintained by a spring in a withdrawn rest position completely inside cavity 52, and, when activated by the hydraulic cylinder, moves into a forward cutting position projecting frontwards from counterjaw 18 and cooperating with stop 35 carried by cooling body 28.

The advantages of the present invention are as follows.

In particular, incorporating ceramic heating elements 30 in metal cooling body 28 greatly improves the heat dissipation of sealing device 24 as compared with that of the sealing jaw described in the aforementioned American patent, thus enabling sealing device 24 to be cooled more or less instantaneously and brought to the same optimum working temperature at the start of each sealing operation.

On packaging machines featuring sealing devices 24 in accordance with the present invention, the same working conditions can therefore be reproduced at each sealing operation, thus enabling precise control of the flow of molten thermoplastic material within the packaging material and, hence, the formation of seals of the same high quality as those obtainable by induction heat sealing.

Moreover, heating and cooling sealing device 24 more or less instantaneously reduces sealing time considerably, thus enabling pulsation heat sealing to be employed on high-speed packaging machines, and in particular on last-generation machines capable of producing 20,000 packages and hour.

Tests conducted by the Applicant have also shown that, using sealing devices 24 in accordance with the present invention, transverse sealing of tube 4 of packaging material is less sensitive to nonparallelism of jaws 16, 18 and to the position of the longitudinal seal on tube 4 of packaging material, and that sealing device 24 according to the present invention lends itself perfectly to use on multiple-jaw packaging machines.

Ridges 36 of ceramic heating elements 30 may be of any shape other than that described and illustrated herein, so as to adapt to specific applications and desired sealing characteristics.

## Claims

1. A packaging machine for producing sealed packages (2) of pourable food products from a tube (4) of heat-seal sheet packaging material fed along a vertical path (A) and filled continuously with said food product, said packaging machine (1) comprising at least one pair of jaws (16,18) acting cyclically and successively on said tube (4) to grip the tube (4) at equally spaced cross sections; one of said pair of jaws (16) having a sealing device (24) comprising a ceramic heating element (30) having a body (34) of electrically insulating ceramic material and a cooling body (28), an opposite one of said pair of jaws (18) having a pressure pad (44) for interacting with said sealing device (24) for heat sealing the packaging material between said sealing device (24) and said pressure pad (44) at said cross sections when said jaws (16, 18) grip said tube (4), and a cutting member (50) movable in a direction lying in a plane (B) perpendicular to said vertical path (A) for cutting said packaging material at said cross sections, **characterized in that** said cooling body (28) has a cavity (32) housing and supporting said ceramic heating element (30), said ceramic heating element (30) having walls closely contacting the walls of said cavity (32), and **in that** said cooling body has a further cavity (33) housing a stop (35) cooperating with said cutting member (50).

2. A packaging machine according to claim 1, further comprising two of said ceramic heating elements (30) housed in respective cavities (32) located at opposite sides of the plane (B) of movement of said cutting member (50), and two pressure pads (44) located opposite the two ceramic heating elements (30).

3. A packaging machine according to claim 1, wherein said cooling body (28) is deformed for clamping said ceramic heating element (30) inside said cavity (32) of said cooling body (28).

4. A packaging machine according to claim 2, **characterized in that** said ceramic heating elements (30) each have a ridge (36) of ceramic material integral with said body (34) of electrically insulating ceramic material and cooperating with the pressure pads (44) when said jaws (16, 18) grip said tube (4).

## Patentansprüche

1. Verpackungsmaschine zur Herstellung von versiegelten Verpackungen für fließfähige Nahrungsmittel aus einem Schlauch (4) aus einer heißgesiegelten Bahn aus Verpackungsmaterial, die entlang eines vertikalen Pfads (A) geführt und kontinuierlich mit dem Nahrungsmittel befüllt wird, wobei die Verpackungsmaschine (1) wenigstens ein Paar Backen (16, 18) enthält, das zyklisch und nacheinander auf den Schlauch (4) einwirkt, um den Schlauch (4) an gleich beabstandeten Querschnitten zu ergreifen; wobei eine Backe (16) des Backenpaares eine Versiegelungsvorrichtung (24) hat, die ein Keramikheizelement (30) mit einem Körper (34) aus elektrisch isolierendem Keramikmaterial und einen Kühlkörper (28) hat, und wobei eine gegenüberliegende Backe (18) des Backenpaares ein Druckkissen (44) hat, das mit der Versiegelungsvorrichtung (24) interagiert, um das Verpackungsmaterial zwischen der Versiegelungsvorrichtung (24) und dem Druckkissen (44) an den Querschnitten heißzusiegeln, wenn die Backen (16, 18) den Schlauch (4) ergreifen, und ein Schneidteil (50), das in einer senkrecht zum vertikalen Pfad (A) liegenden Ebene (B) bewegt werden kann, um das Verpackungsmaterial an den Querschnitten abzuschneiden, **dadurch gekennzeichnet, dass** der Kühlkörper (28) einen Hohlraum (32) hat, der das Keramikheizelement (30) beherbergt und stützt, wobei das Keramikheizelement (30) Wände hat, die in engem Kontakt mit den Wänden des Hohlraums (32) stehen, und dass der Kühlkörper einen weiteren Hohlraum (33) aufweist, der einen Anschlag (35) beherbergt, der mit dem Schneidteil (50) zusammenwirkt.

2. Verpackungsmaschine nach Anspruch 1, ferner umfassend zwei Keramikheizelemente (30), die in den jeweiligen Hohlräumen (32) beherbergt sind, die auf gegenüberliegenden Seiten der Bewegungsebene (B) des Schneidteils (50) angeordnet sind, und zwei Druckkissen (44), die gegenüber den beiden Keramikheizelementen (30) angeordnet sind.

3. Verpackungsmaschine nach Anspruch 1, wobei der Kühlkörper (28) verformt ist, um das Keramikheizelement (30) in den Hohlraum (32) des Kühlkörpers (28) einzuspannen.

4. Verpackungsmaschine nach Anspruch 2, **dadurch gekennzeichnet, dass** die Keramikheizelemente (30) einen Grat (36) aus Keramikmaterial haben, der in dem Körper (34) aus elektrisch isolierendem Keramikmaterial integriert ist und mit den Druckkissen (44) zusammenwirkt, wenn die Backen (16, 18) den Schlauch (4) ergreifen.

## Revendications

1. Machine d'emballage pour la production d'emballages scellés (2) de produits alimentaires liquides à partir d'un tube (4) de matériau d'emballage en feuille thermoscellable fourni le long d'un passage vertical (A) et rempli en continu avec ledit produit alimentaire, ladite machine d'emballage (1) comprenant au moins une paire de mâchoires (16, 18) agissant cycliquement et successivement sur ledit tube (4) pour saisir le tube (4) au niveau de sections transversales espacées de façon égale ; une parmi ladite paire de mâchoires (16) ayant un dispositif de scellage (24) comprenant un élément chauffant en céramique (30) ayant un corps (34) de matériau en céramique isolant électriquement et un corps de refroidissement (28), une autre opposée parmi ladite paire de mâchoires (18) ayant un tampon de pression (44) pour avoir une action réciproque avec ledit dispositif de scellage (24) pour thermosceller le matériau d'emballage entre ledit dispositif de scellage (24) et ledit tampon de pression (44) au niveau desdites sections transversales lorsque lesdites mâchoires (16, 18) saisissent ledit tube (4), et un élément de coupe (50) mobile dans une direction se trouvant dans un plan (B) perpendiculaire audit passage vertical (A) pour couper ledit matériau d'emballage au niveau desdites sections transversales, **caractérisée en ce que** ledit corps de refroidissement (28) a une cavité (32) logeant et supportant ledit élément chauffant en céramique (30), ledit élément chauffant en céramique (30) ayant des parois entrant en contact de près avec les parois de ladite cavité (32), et **en ce que** ledit corps de refroidissement a une autre cavité (33) logeant une butée (35) coopérant avec ledit élément de coupe (50).

2. Machine d'emballage selon la revendication 1, comprenant en outre deux desdits éléments chauffants en céramique (30) logés dans des cavités respectives (32) situées au niveau de côtés opposés du plan (B) de mouvement dudit élément de coupe (50), et deux tampons de pression (44) situés en face des deux éléments chauffants en céramique (30).

3. Machine d'emballage selon la revendication 1, dans laquelle ledit corps de refroidissement (28) est déformé pour fixer ledit élément chauffant en céramique (30) à l'intérieur de ladite cavité (32) dudit corps de refroidissement (28).

4. Machine d'emballage selon la revendication 2, **caractérisée en ce que** lesdits éléments chauffants en céramique (30) ont chacun une saillie (36) de matériau en céramique solidaire dudit corps (34) de matériau en céramique isolant électriquement et coopérant avec les tampons de pression (44) lorsque lesdites mâchoires (16, 18) saisissent ledit tube (4).
